# EUROPÄISCHE PATENTSCHRIFT

(11) **EP 0 330 096 B1**
(45) Veröffentlichungstag und Bekanntmachung des Hinweises auf die Patenterteilung: **29.06.1994**
(21) Anmeldenummer: 89102817.7
(22) Anmeldetag: 18.02.1989
(51) Int. Cl.: B01D 47/08

(54) **Vorrichtung zur Gasreinigung**
Device for the purification of gas
Dispositif de purification de gaz

(30) Priorität: 22.02.1988 DE 3805445
(43) Veröffentlichungstag der Anmeldung: 30.08.1989
(73) Patentinhaber: Friatec Aktiengesellschaft Keramik- und Kunststoffwerke, D-68229 Mannheim (DE)
(72) Erfinder: Schnabel, Gerhard, D-6836 Oftersheim (DE); Weckbach, Willi, D-6803 Edingen-Neckarhausen (DE); Schmitz, Wilhelm, D-6802 Landenburg (DE)
(74) Vertreter: Klose, Hans, Dipl.-Phys.

(56) Entgegenhaltungen:
- DE-A- 3 324 124
- DE-B- 1 205 494
- US-A- 1 992 762
- US-A- 3 347 535
- US-E- 29 083

## Beschreibung

Die Erfindung bezieht sich auf eine Vorrichtung zur Gasreinigung mittels Flüssigkeit gemäß den im Oberbegriff des Patentanspruchs 1 angegebenen Merkmalen.

Aus der DE-A-33 24 124 ist eine derartige Vorrichtung bekannt, welche einen rohrförmigen Förderkörper aufweist, der in die in einem Behälter sich befindende Flüssigkeit eintaucht. Der Förderkörper weist am unteren Ende propellerartige Förderblätter auf. Der oberhalb des Förderkörpers befindliche Sprühkörper ist gleichfalls rohrförmig ausgebildet und enthält eine Anzahl von Öffnungen, aus welchen die nach oben geförderte Flüssigkeit, ohne daß hierbei ein Druckaufbau erfolgt, austritt. Der Sprühkörper enthält radial außen angeordnete Scheiben, mittels welchen die aus den Öffnungen austretende Flüssigkeit verteilt wird. Die Flüssigkeit soll an der Scheibenanordnung haften, radial nach außen strömen und dort von den Scheiben abreißen, um in eine ringförmige Sprühzone versprüht zu werden. Der Radius dieser Scheiben muß vergleichweise groß ausgebildet sein, wodurch einerseits ein großes Bauvolumen bedingt ist und andererseits in der Praxis nicht unerhebliche Schwierigkeiten hinsichtlich der Auswuchtung der Scheibenanordnung gegeben sind. Zur Vermeidung einer unzulässigen Unwucht müssen die Scheiben mit einem entsprechenden Aufwand sehr exakt gefertigt und montiert werden, wobei zusätzliche Maßnahmen zur Auswuchtung notwendig sind. Die als Axialgebläse wirkende Scheibenanordnung bedingt insgesamt ein vergleichsweise großes Bauvolumen der vorbekannten Sprühvorrichtung. Es sei festgehalten, daß Sprühvorrichtungen der genannten Art zur kontinuierlichen Reinigung von Gasen dienen, um die Konzentration der in den Gasen enthaltenen Schadstoffe zu reduzieren, wobei gegebenenfalls die zur Reinhaltung der Luft geltenden gesetzlichen Vorschriften zu beachten sind. Die pro Zeiteinheit (z.B. Stunde) und pro Volumen zulässigen Schadstoffmengen sollen unter Berücksichtigung der geltenden Vorschriften eingehalten werden. Die im Gas enthaltenen Fremd- oder Schadstoffe werden von der Flüssigkeit, z. B. Wasser, gebunden und mit dieser somit aus dem Gas ausgewaschen. Die Vorrichtungen werden daher auch als Gaswäscher bezeichnet, wobei in Abhängigkeit der Zusammensetzung des Gases auch alkalische Flüssigkeiten zum Einsatz gelangen.

Ferner ist aus der US-A-1 992 762 eine Vorrichtung bekannt, deren Sprühkörper wiederum eine Scheibenanordnung mit Ringen und Abreißkanten aufweist, an welchen eine Zerstäubung der mittes des Förderkörpers nach oben geförderten Flüssigkeit erfolgen soll. Die vorbekannte Vorrichtung weist ein vergleichsweise großes Bauvolumen auf, zumal in axialer Richtung mehrere Scheiben übereinander angeordnet sind. Des weiteren muß die Vorrichtung für hohe Drehzahlen ausgelegt sein, um die gewünschte Verteilung und Versprühung der Flüssigkeit in der Kammer zu ermöglichen.

Der Erfindung liegt die Aufgabe zugrunde, eine Vorrichtung der genannten Art dahingehend auszubilden, daß mit geringem konstruktivem Aufwand eine effektive Gasreinigung erfolgt, wobei aufwendige Leitungssysteme für die Flüssigkeit, Pumpen und dergleichen vermieden werden sollen. Die Vorrichtung soll ein geringes Bauvolumen aufweisen und problemlos in bestehende Anlagenteile, Laboreinrichtungen und dergleichen, ggf. nachträglich integriert werden können. Der in Laboratorien oder Fabrikhallen vorhandene freie Raum über Experimentierkammern, Abzügen bzw. Digestorien oder ähnlichen Anlagen soll genutzt werden und die Gas- bzw. Abzugsrohre sollen im wesentlichen unverändert genutzt werden können. Ferner soll ein hoher Abscheidegrad bei großer Funktionssicherheit gewährleistet werden, wobei die Zug-oder Druckverluste im Rohrsystem der Abgase klein und die mit dem Gas entweichende Flüssigkeitsmenge niedrig sein soll.

Die Lösung dieser Aufgabe erfolgt gemäß den im Kennzeichen des Patentanspruchs 1 angegebenen Merkmalen.

Die vorgeschlagene Vorrichtung zeichnet sich durch eine kompakte und funktionssichere Bauweise aus. Die Kanäle des Sprühkörpers sind von radial außenliegenden Düsen abgeschlossen, durch welche die Flüssigkeit unter Druck in die Kammer mit dem zu reinigenden Gas gesprüht wird. Unter Berücksichtigung der radialen Länge der Kanäle erfolgt ein Druckaufbau, so daß die Flüssigkeit mit hohem Druck aus den Düsen in die Kammer gefördert und versprüht wird. Anstelle der mit vergleichsweise hohen Drehzahlen laufenden vorbekannten Scheibenanordnung, wobei ggfs. noch ein zusätzliches Gebläse zur Wirbelbildung und Verkleinerung der abgeschleuderten Flüssigkeitströpfchen beitragen kann, wird mit geringem Aufwand durch Vorgabe der Länge der Kanäle im Sprühkörper selbst die Druckerhöhung erzielt und mittels den radial außenliegenden Düsen eine feine Versprühung der Flüssigkeit erreicht. Der Bauaufwand und Platzbedarf bleiben gering und gleichwohl wird eine effektive Versprühung der Flüssigkeit in der Kammer mit dem zu reinigenden Gas erreicht. Aufgrund der hierdurch erreichten Vernebelung der Flüssigkeit in kleinste Tröpfchen weist das gereinigte Gas einen vergleichsweise hohen Feuchtigkeitsgehalt auf und mittels den in der Kammer angeordneten Leitelementen wird eine effektive Abscheidung aus dem gereinigten Gas vor dessen Abströmung in das Abzugsrohr durchgeführt. Hierdurch werden vor allem bei einem sauren Medium Risiken, hinsichtlich Korrosion der angechlossenen Abgaskanäle vermieden. Das Förder- und Sprühsystem kann große Flüssigkeitsmengen bei vergleichweise kleiner Antriebsleistung fördern, wobei aufgrund des Druckaufbaus in den genannten Kanälen niedrige Drehzahlen genügen. Die Flüssigkeit gelangt in Form eines Sprühnebels oder in kleinen Tröpfchen in die Kammer, wobei die im Gas enthaltenen Schwebestoffe ebenso wie Gaspartikel je nach Zusammensetzung chemisch reagieren und/oder mittels der Flüssigkeit ausgewaschen werden. Durch die Kombination der radialen Kanäle mit den Düsen können die radialen Abmessungen des Sprühsystems vergleichsweise klein ausgebildet werden. Hingegen erfordert die aus der erwähnten DE-A-33 24 124 bekannte Scheibenanordnung vergleichsweise große radiale Abmessungen. Desweiteren kann aber auch die axiale Länge des Sprühsystems und damit der gesamten erfindungsgemäßen Vorrichtung klein ausgebildet werden. Von besonderer Bedeutung ist ferner, daß in einer zweckmäßigen Ausgestaltung die Kanäle nicht nur in exakt radialer Richtung, sondern auch in zur Drehachse geneigten Richtungen angeordnet werden können. Die Flüssigkeit wird also nicht nur in radialer Richtung verteilt, sondern sie kann entsprechend der geneigten Anordnung der Kanäle und zugehörenden Düsen auch nach oben bzw. nach unten versprüht werden, wodurch eine besonders intensive Nutzung des zur Verfügung stehenden Bauvolumens und eine sehr gute Vernebelung und Versprühung der Flüssigkeit in der Sprühkammer erzielt wird.

In einer besonderen Ausgestaltung weist der Förderkörper am unteren Ende einen Ring mit einem im Vergleich zum Innendurchmesser des Rohres kleineren Durchmesser auf. Ferner sind an der Innenwand des Förderkörpers Wandrippen vorgesehen, die in Verbindung mit dem Ring eine besonders effektive Förderung der Flüssigkeit ergeben. Das derart ausgebildete Fördersystem ergibt bei kleinem Bauvolumen eine hohe Effektivität und erzeugt eine Rotationsströmung der nach oben geförderten Flüssigkeit. Durch die Vorgabe und Anordnung der Wandrippen sowie die Abstimmung des Ringinnendurchmessers in bezug auf den Innendurchmesser des Förderrohres kann eine zuverlässige Dimensionierung für die zu fördernde Flüssigkeitsmenge vorgenommen werden. Demgegenüber ist das aus der bereits erwähnten DE-A-33 24 124 bekannte Fördersystem als eine Axialpumpe ausgebildet, die in der Praxis nur ca. 10 % der Förderhöhe des hiermit vorgeschlagenen Fördersystems erreicht. Aufgrund der verbesserten Förderleistung kann insbesondere das Bauvolumen klein gehalten werden und/oder die Drehzahl der Antriebsvorrichtung für das Fördersystem und das Sprühsystem zur Erreichung einer hohen Lebensdauer und Funktionssicherheit nicht unerheblich reduziert werden. Aufgrund des mit dem vorgeschlagenen Sprühsystem erreichten Druckaufbaus kann auch bei vergleichweise kleinen Drehzahlen die nach oben geförderte Flüssigkeitsmenge wirksam versprüht werden. Im Gegensatz hierzu muß bei der bekannten Vorrichtung der erwähnten DE-A mit relativ hohen Drehzahlen gefahren werden, damit an den radialen Enden der Scheibenanordnung die Flüssigkeit in der geforderten Weise abreißen und versprüht werden kann.

Weitere Ausgestaltungen und vorteilhafte Weiterbildungen der Erfindung sind in den abhängigen Ansprüchen angegeben.

Die Erfindung wird nachfolgend anhand der in der Zeichnung dargestellten Ausführungsbeispiele näher erläutert. Es zeigen:
- Fig. 1: einen Schnitt durch die Vorrichtung in einer vertikalen Schnittebene,
- Fig. 2: einen Schnitt in einer anderen vertikalen Schnittebene, und zwar im Bereich des rotierenden Förderkörpers,
- Fig. 3: einen Schnitt durch eine weitere Ausführungsform in einer Schnittebene ähnlich der von Fig. 2,
- Fig. 4: einen Schnitt entlang Schnittlinie IV gemäß Fig. 3
- Fig. 5: einen Schnitt in der gleichen Schnittebene wie Fig. 4 durch eine weitere Ausführungsform.

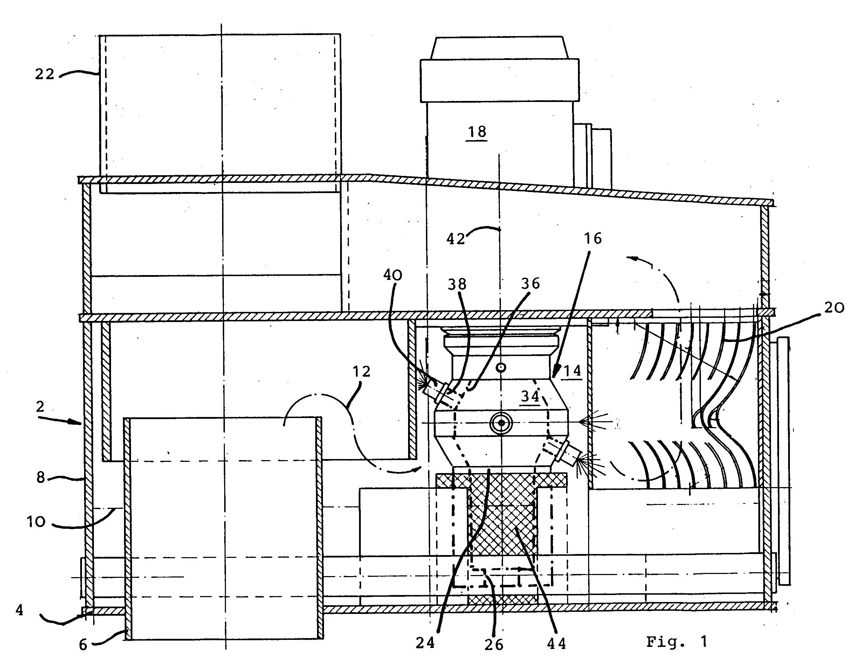

Fig. 1 zeigt ein Gehäuse 2, in dessen Boden 4 ein Rohrstutzen 6 angeordnet ist. Der Boden 4 ist mit den Wänden 8 flüssigkeitsdicht verbunden und mittels der strichpunktierten Linie 10 ist die Oberfläche einer Flüssigkeit angedeutet. Je nach der Art des durch den Rohrstutzen 6 von unten zugeführten Gases kann als Flüssigkeit Wasser oder eine andere Reinigungsflüssigkeit mit entsprechenden chemischen Eigenschaften vorhanden sein. Sind beispielsweise in dem zugeführten Gas Schwefeloxide oder Stickoxide enthalten, so ist es zweckmäßig, eine alkalische Reinigungsflüssigkeit vorzusehen. Entsprechend dem Pfeil 12 strömt das Gas in die Kammer 14, in welche mittels des erfindungsgemäßen kombinierten Förder- und Sprühsystems 16 die Flüssigkeit gesprüht wird. Das Förder- und Sprühsystem 16 befindet sich hinter der Zeichenebene und wird von oben durch einen Elektromotor 18 angetrieben. Das mittels der Flüssigkeit gereinigte Gas gelangt über Leitelemente 20 nach oben und von dort zum Abzugsrohr 22. In der Kammer 14 befindet sich ein feiner Sprühnebel der Flüssigkeit, wobei eine enge Durchmischung mit dem durchströmenden Gas erfolgt. Mittels der Tropfenabscheider 20 erfolgt eine wirksame Trennung der Flüssigkeit, wobei sich relativ große Flüssigkeitströpfchen bilden, die aufgrund der Schwerkraft nach unten abtropfen, während das nach oben strömende und gereinigte Gas nur noch einen vergleichsweise niedrigen Feuchtigkeitsgehalt aufweist. Aufgrund der Leitelemente erfolgt eine wirksame Abscheidung der Flüssigkeit und es wird der Flüssigkeitsverlust niedrig gehalten.

Das System 16 weist unten einen Förderkörper 24 auf, der hier als ein rotierendes Förderrohr ausgebildet ist. Der Förderkörper 24 ragt in die Flüssigkeit und besitzt unten eine Öffnung 26, durch welche die Flüssigkeit eintritt und in Rotation versetzt und dadurch nach oben gefördert wird. Obgleich sich die Ausbildung des Förderkörpers als Förderrohr mit inneren Wandrippen besonders einfach und zweckmäßig erwiesen hat, können im Rahmen dieser Erfindung auch andere Systeme zur Erzeugung der Rotation vorgesehen werden. Wesentlich ist bei allen Ausführungsformen, daß kein separater Pumpenkreislauf mit externen Rohrleitungen und dergleichen vorgesehen ist. Der wie auch immer ausgebildete Förderkörper ist unterhalb des Sprühsystems angeordnet und wird von diesem mittels des gleichen Motors 18 angetrieben.

Der Sprühkörper 34 weist innen einen Hohlraum 36 auf, in welchen die hochgeförderte Flüssigkeit gelangt. Aus dem Hohlraum 36 führen Kanäle 38 radial nach außen zu Sprühdüsen 40. Bei Rotieren des Sprühkörpers 34 wird die Flüssigkeit aufgrund der Fliehkräfte radial nach außen geschleudert und durch die Düsen 40 mit hohem Druck gefördert. Entsprechend der radialen Länge der Kanäle 38 bzw. dem Abstand der Düsen 40 von der Drehachse 42 wird der Druck vorgegeben. Es bedarf keiner besonderen Hervorhebung, daß der Druck maßgeblich auch von der Drehzahl abhängig ist. Die dargestellten Kanäle 38 und die zugehörenden Düsen 40 sind mit ihren Längsachsen bezüglich der Drehachse 42 um einen Winkel kleiner 90° geneigt angeordnet. Die in einer frontalen Ansicht erkennbare Düse 41 und deren Kanal liegen hingegen in einer Radialebene. Es versteht sich, daß in dieser Radialebene noch weitere, hier nicht weiter dargestellte, Düsen und Kanäle angeordnet sind. Durch die zur Drehachse 42 geneigt angeordneten Kanäle 38 und Düsen wird folglich die Flüssigkeit nach oben bzw. nach unten in die Kammer 14 eingesprüht, wodurch in besonders zweckmäßiger Weise eine sehr gute Durchmischung des Gases mit der versprühten Flüssigkeit bei geringem Bauvolumen erzielt wird. Der Sprühkörper 34 weist vergleichsweise kleine axiale Ausdehnung in Richtung der Drehachse 42 auf und gleichwohl wird über eine große axiale Höhe in der Kammer 14 die Flüssigkeit versprüht.

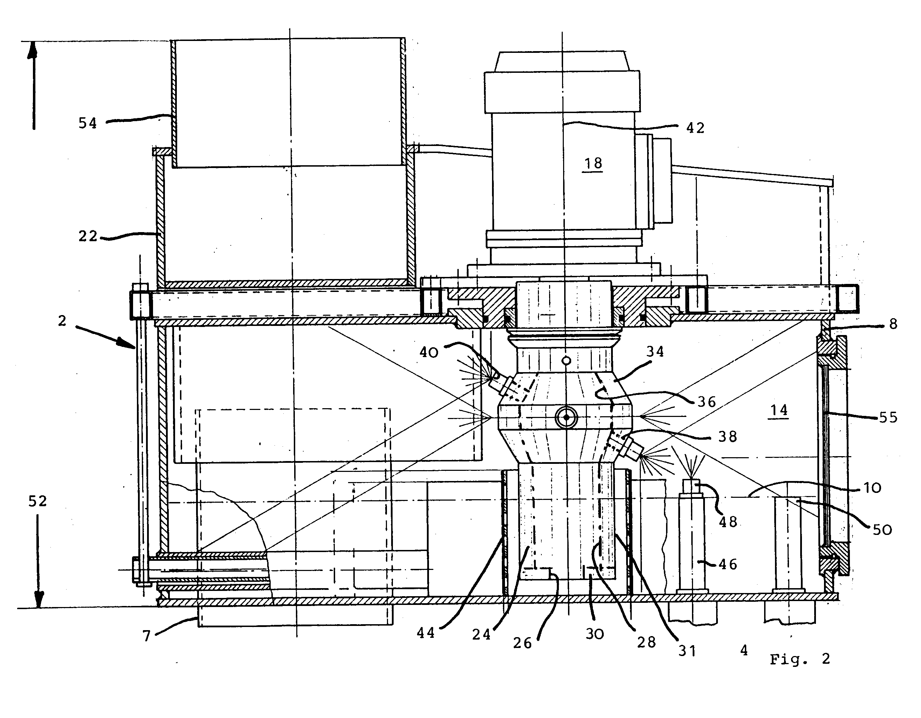

Fig. 2 zeigt einen weiteren Schnitt, wobei die Schnittebene nunmehr hinter der Zeichenebene gemäß Fig. 1 liegt. Es ist nunmehr ein zweiter Rohrstutzen 7 zu erkennen, durch welchen ebenfalls das zu reinigende Gas von unten her in das Gehäuse 2 einströmen kann. Die Stromstörer mit Sieb 44 verhindern eine rotierende Strömung im Bereich der Außenwand 31 des Förderkörpers 24 sowie eine Verschmutzung des Förder- und Sprühsystems. An der hier strichpunktiert angedeuteten Innenwandung 28 des Förderkörpers 24 steigt die Flüssigkeit nach Art einer Parabel nach oben. Am unteren Ende des Förderkörpers 24 ist ein Ring 30 mit der Öffnung 26 vorhanden, deren Durchmesser kleiner ist als der Durchmesser der Innenwand 28. Die Förderleistung wird hierdurch wesentlich verbessert. Im Bereich der Außenfläche des Förderrohres bzw. Förderkörpers 24 sind Stromstörer mit Sieb 44 angeordnet, um das Entstehen einer Ringströmung an der Außenfläche des Förderkörpers 24 zu unterbinden. Ein Absinken der Oberfläche der Flüssigkeit durch Rotation nahe der Außenwand des Förderkörpers 24 und eine damit verbundene Reduzierung der Förderleistung wird zuverlässig verhindert.

Anstelle des Stromstörers mit Sieb 44 oder auch zusätzlich können im Bereich der Außenwand 31 des Förderkörpers 24 Platten zur Unterbindung einer Ringströmung angeordnet sein. Derartige Platten werden zweckmäßig sternförmig zur Drehachse 42 angeordnet. Es werden ausschließlich Platten in den Fällen angeordnet, in welchen zu befürchten ist, daß Verunreinigungen oder die aus dem Gas ausgewaschenen bzw. durch chemische Reaktion ausgefällten Stoffe ein Zusetzen eines Siebes zur Folge haben könnten. Es hat sich als zweckmäßig erwiesen, die Sprühdüsen 40 in verschiedenen Ebenen und ferner auch in verschiedenen Richtungen bezüglich der Drehachse 42 anzuordnen. Die in unterschiedlichsten Richtungen vom Sprühkörper 34 ausgesprühte Flüssigkeit wird an die im Inneren des Gehäuses 2 vorhandenen Kanten, Begrenzungsflächen oder dergleichen mit hohem Druck angespritzt, und durch den Aufprall wird eine weitere Verkleinerung der Tröpfchen bewirkt, so daß sich in der Kammer 14 ein sehr feiner Sprühnebel ausbildet, der eine sehr effektive Reinigung des Gases sicherstellt.

Durch das Rohr 46 wird die Flüssigkeit, insbesondere Wasser, zugeführt, wobei am oben Ende des Rohres eine Düse 48 zur definierten Vorgabe des Zuflusses vorhanden ist. Es ist ferner ein Überlauf 50 mit einem Abflußrohr zu erkennen, dessen Oberkante den Füllstand der Flüssigkeit bzw. deren Oberfläche 10 definiert. Der Flüssigkeitszulauf wird mittels eines Sensors, der die Füllstandshöhe überwacht, gesteuert.

Es sei an dieser Stelle angemerkt, daß die Höhe 52, gemessen von der Unterkante des Bodens 4 bis zum oberen Ende des Elektromotors 18 bei diesem Ausführungsbeispiel etwa 60 cm groß ist. Die senkrecht zur Zeichenebene verlaufende Breite der Vorrichtung beläuft sich auf ca. 100 cm. Die Vorrichtung kann daher problemlos zum Nachrüsten von Digestorien, Versuchskammern und dergleichen zum Einsatz gelangen und in einfacher Weise oben auf die Decke derartiger Anordnungen nachträglich aufgebaut werden. Wie bereits ausgeführt, weist die Vorrichtung zwei Rohrstutzen auf, die zweckmäßig entsprechend den üblicherweise vorhandenen Hosenrohren derartiger Kammern angeordnet und ausgebildet sind. Es ist ersichtlich, daß lediglich ein derartiges Hosenrohr herausgenommen werden muß, um in einfacher Weise das Abzugsrohr 22 an einen vorhandenen Abzugskanal 54 anzuschließen. Die Vorrichtung ist eine komplette Funktionseinheit und die Installation von externen Leitungssystemen, Pumpen und dergleichen ist nicht erforderlich. In der Wand 8 ist ähnlich einem Bullauge eine Glasscheibe 55 vorhanden, durch welche ohne weiteres die Funktion oder der Flüssigkeitsstand von dem Personal geprüft werden kann.

Da die Vorrichtung unmittelbar über der Versuchskammer oder dem Digestorium angeordnet wird, dient sie in besonders zweckmäßiger Weise gleichzeitig als Flammensperre. Bildet sich in der Versuchskammer aufgrund irgendwelcher Fehler ein Feuer aus, so können keine Flammen in den Abzugskanal 54 durchschlagen. Die in die Kammer 14 gesprühte Flüssigkeit bewirkt eine funktionssichere Löschung, so daß erfindungsgemäß das Entstehen eines Brandes im Abzugskanal mit hoher Sicherheit unterbunden wird.

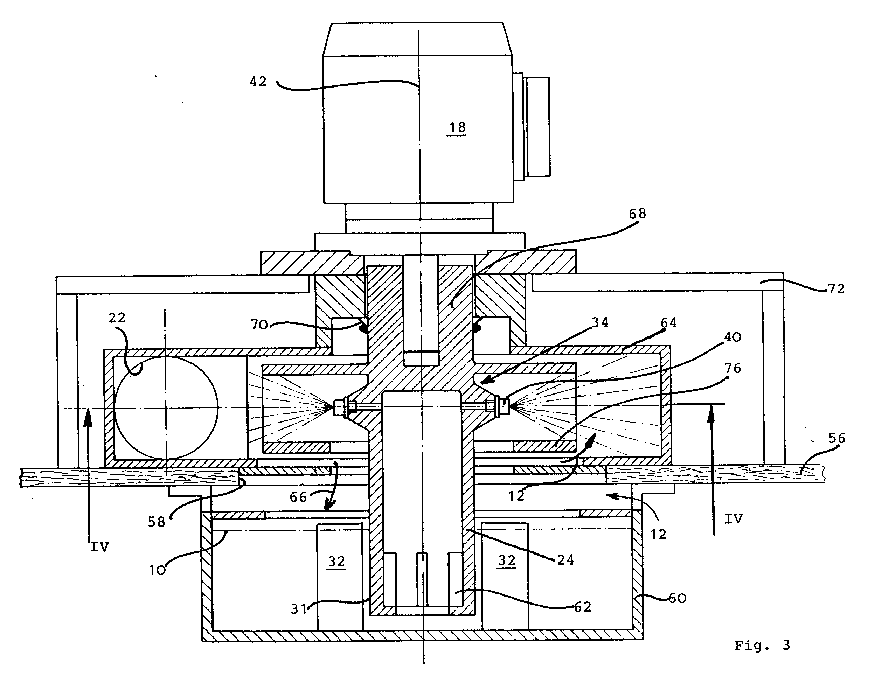

In Fig. 3 ist eine Ausführungsform dargestellt, die eine gute Integration in eine Versuchskammer ergibt, deren Decke 56 hier teilweise zu erkennen ist. Der hier wiederum röhrenförmig ausgebildetete Förderkörper 24 ragt durch eine Deckenöffnung 58 in einen Behälter 60, welcher an der Unterseite der Decke 56 angeordnet ist und die Flüssigkeit mit der Oberfläche 10 aufnimmt. Es sind hier zwei sternförmig zur Drehachse 42 angeordnete Platten 32 nahe der Außenwand 31 des Förderkörpers 24 gut zu erkennen. Das Förderrohr bzw. der Förderkörper 24 weist entsprechend dem Ring 30 ausgebildete Stege 62 oder Wandrippen an der Innenwand auf, wodurch eine verbesserte Förderleistung erzielt wird. Auch die eingangs erläuterten Ausführungsformen weisen im Rahmen dieser Erfindung derartige Wandrippen bzw. Stege zwecks Erhöhung der Förderleistung auf. Der Sprühkörper 34 rotiert in einem Spiralkanal 64, welcher oberhalb der Decke 56 angeordnet ist. Das zu reinigende Gas strömt gemäß den Pfeilen 12 in den Spiralkanal 64, welcher in das Abzugsrohr 22 mündet. Die Flüssigkeit wird mittels den Sprühdüsen 40 in den Spiralkanal 64 gesprüht und in einen nicht dargestellten Tropfenabscheider geführt, aus dem die niedergeschlagenen Tropfen in den Behälter 60 zurückfließen. Der Spiralkanal 64 ermöglicht eine gute Abströmung des Gases bei geringen Druckverlusten. Diese Ausführungsform zeichnet sich ferner durch eine kompakte Bauweise und ein geringes Gewicht aus. Der Förderkörper 24 und der Sprühkörper 34 sind zu einer Baueinheit integriert, die oben eine Kupplung 68 für die Welle des Antriebsmotors 18 aufweist. Der Sprühkörper 34 hat gleichzeitig die Wirkung eines radialen Ventilatorrades. Aufgrund dieser erfindungswesentlichen Ausbildung als Ventilatorrad erfolgt eine intensive Verteilung und Verwirbelung des zu reinigenden Gases mit der Reinigungsflüssigkeit, wodurch eine besonders intensive Reinigung gewährleistet wird.

Mittels einer Wellendichtung 70 wird das Austreten von Gas und Flüssigkeit im Kupplungsbereich sicher unterbunden. Der Antriebsmotor 18 ist mit seinem Flansch in einfacher Weise auf Tragelementen 72 abgestützt, wobei eine einfache Montage oder gegebenenfalls Demontage zu Wartungs-oder Reparaturzwecken erfolgen kann. Mittels der Wellendichtung 70 ist die Spiralkammer 64 funktiongssicher im Bereich des Kupplungsteiles 68 abgedichtet. Der Kupplungsteil 68 ist gleichfalls integraler Bestandteil des gesamten Förder- und Sprühsystems. Förderrad und Antrieb müssen nicht direkt gekuppelt sein.

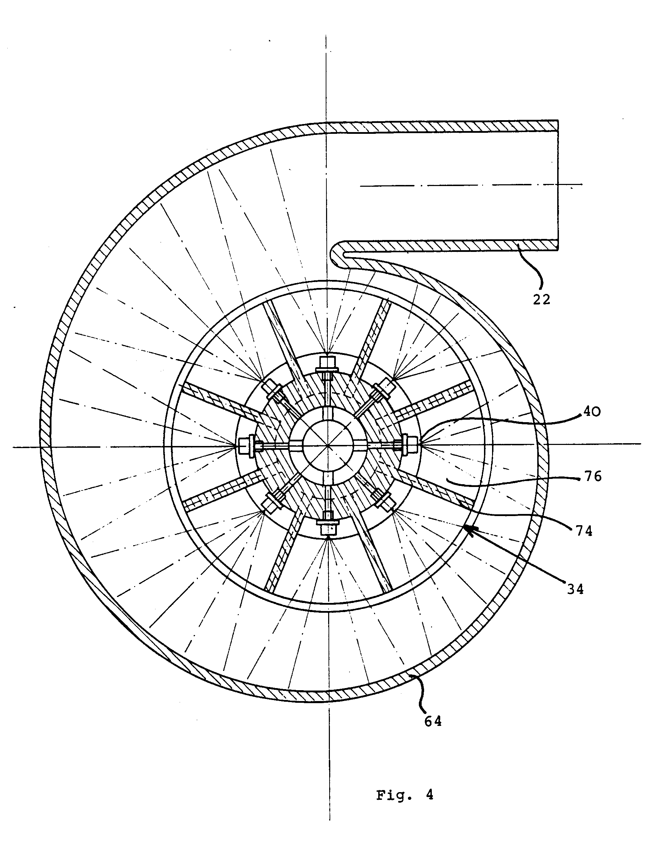

Fig. 4 zeigt in der Schnittebene IV gemäß Fig. 3 den Spiralkanal 64 mit dem Sprühsystem 34. Die Sprühdüsen 40 sind in Umfangsrichtung jeweils zwischen radial nach außen verlaufenden Trennwänden 74 angeordnet. Sie können auch gekrümmmt sein wie die Schaufeln eines Ventilators. Die aus den Düsen 40 austretende Flüssigkeit gelangt an den vorbeiströmenden Gasstrom. Wie ferner in Verbindung mit Fig. 3 ersichtlich, gelangt die ausgesprühte Flüssigkeit auch an die oberen und unteren Wände des Sprühsystems, wobei durch den Aufprall an diese Wände eine zusätzliche Zerkleinerung der Flüssigkeitstöpfchen bewirkt wird. Mittels den Trennwänden 74 werden ferner die unteren, Radscheibe 76 des Sprühsystems gehaltert. Das im Spiralkanal 64 gereinigte Gas strömt durch das Abzugsrohr 22 ab.

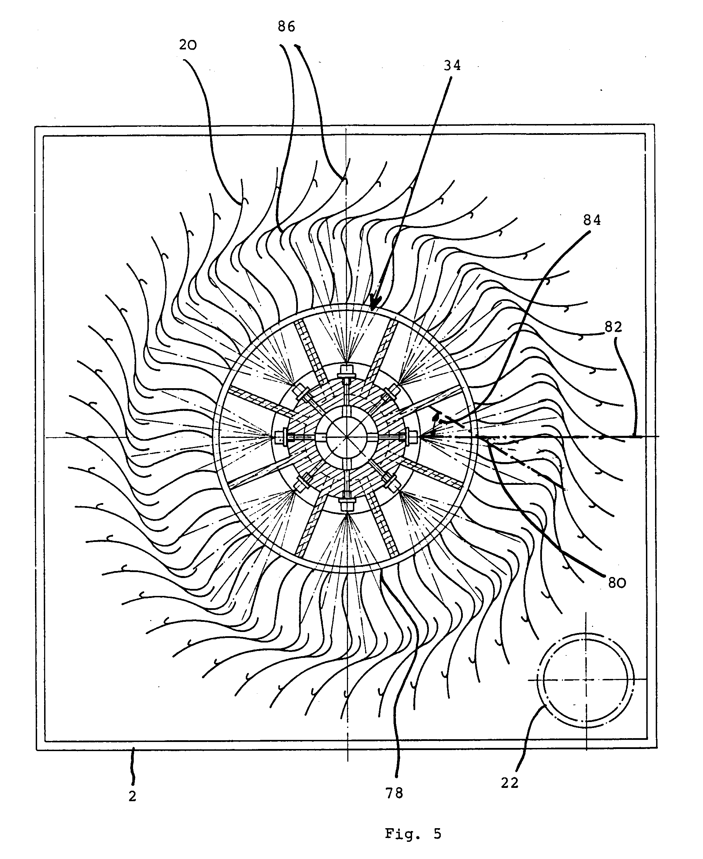

Fig. 5 zeigt eine Schnitt entsprechend Fig. 4, wobei das Sprühsystem mit der letztgenannten Ausführungsform übereinstimmend ausgebildet ist. Nunmehr ist jedoch kein Spiralkanal vorhanden, sondern das Sprühsystem 34 wird von Leitelementen 20 umgeben. Diese Leitelemente 20 sind im Inneren des Gehäuses 2 in hier nicht weiter dargestellter Weise befestigt und umgeben strahlenartig das Sprühsystem 34. Sie bilden gleichzeitig einen Tropfenabscheider. Das Gehäuse 2 wird entsprechend dem Spiralkanal der anhand von Fig. 3 erläuterten Ausführungsform auf der Decke einer Versuchskammer angeordnet, unterhalb welcher in übereinstimmenden Weise wiederum der Behälter mit der Flüssigkeit angeordnet ist, in welche der Förderkörper von oben her eingreift. Das hier strichpunktiert angedeutete Abzugsrohr 22 befindet sich in der Decke des Gehäuses, also vor der Zeichenebene. Die Leitelemente 20 weisen radial innen Stirnkanten 78 auf, welche sich in vertikaler Richtung bzw. parallel zur Drehachse des Sprühsystems erstrecken. Der Anströmbereich 80 der Lamellen bzw. Leitelemente 20 ist zur jeweiligen Radialebene 82 in einem Winkel 84 geneigt angeordnet. Dieser Winkel 84 wird in der Weise vorgegeben, daß ein optimaler Eintrittswinkel im Hinblick auf möglichst geringe Stoßverluste erreicht wird. Die Leitbleche 20 sind wie ersichtlich wellenartig gekrümmt und enthalten in den Strömungskanal hineinragend Teile 86. Sie wirken in bekannter Weise als Tropfenabscheider. Der radiale Abstand zwischen dem rotierenden Sprührad 34 und den Leitelementen 20 kann wesentlich größer als in Fig. 5 gezeichnet ausgeführt werden. Durch den Tropfenabscheider wird die Bildung von großen Flüssigkeitströpfchen begünstigt, die nach unten abfließen. Der Feuchtigkeitsgehalt im Gas, das durch das Abzugsrohr 22 abströmt, wird hierdurch gering gehalten.

### Bezugszeichenliste

- 2: Gehäuse
- 4: Boden
- 6, 7: Rohrstutzen
- 8: Wand
- 10: Oberfläche der Flüssigkeit
- 12: Pfeil
- 14: Kammer
- 16: Förder- und Sprühsystem
- 18: Antriebsmotor
- 20: Leitelement / Tropfenabscheider
- 22: Abzugsrohr
- 24: Förderkörper
- 26: Öffnung
- 28: Innenwand
- 30: Ring
- 31: Außenwand
- 32: Platte
- 34: Sprühkörper
- 36: Hohlraum
- 38: Kanal
- 40, 41: Düse
- 42: Drehachse
- 44: Sieb
- 46: Zulaufrohr
- 48: Düse von 46
- 50: Überlauf
- 52: Höhe
- 54: Abzugskanal
- 56: Decke
- 58: Deckenöffnung
- 60: Behälter
- 62: Steg / Wandrippe
- 64: Spiralkanal
- 66: Pfeil
- 68: Kupplung
- 70: Wellendichtung
- 72: Tragelement
- 74: Trennwand
- 76: untere Wand von 34
- 78: Stirnkante
- 80: Anströmbereich
- 82: Radialebene
- 84: Winkel
- 86: Teil von 20

## Patentansprüche

1. Vorrichtung zur Gasreinigung mittels Flüssigkeit mit einer Kammer (14), in welche das zu reinigende Gas einströmt und in welche die Flüssigkeit mittels eines Sprühkörpers (34) gesprüht wird, mit einem Förderkörper (24), welcher gemeinsam mit dem Sprühkörper (34) um eine Drehachse drehbar ist und welcher in die in einem Gehäuse (2) vorhandene Flüssigkeit eintaucht und diese nach oben in den Sprühkörper (34) fördert, wobei der Körper (34) nach außen gerichtete Kanäle (38) zum Durchtritt der nach oben geförderten Flüssigkeit aufweist, welche außerhalb des Sprühkörpers verteilt wird, und ferner mit einem Abzugsrohr (22) für das gereinigte Gas,
dadurch gekennzeichnet, daß die Kanäle (38) von radial außen liegenden Düsen (40) abgeschlossen sind, durch welche die Flüssigkeit unter Druck in die Kammer (14) gesprüht wird, wobei durch die radiale Länge der Kanäle (38) der erforderliche Druckaufbau vorgegeben wird,
und daß in der Kammer (14) Leitelemente (20) derart angeordnet sind, daß eine Abscheidung der Flüssigkeit aus dem gereinigten Gas vor dessen Abströmung in das Abzugsrohr (22) erfolgt.

2. Vorrichtung nach Anspruch 1, dadurch gekennzeichnet, daß die Leitelemente (20) zumindest näherungsweise vertikal angeordnet sind, um ein Ablaufen der sich an den Leitelementen (20) bildenden Flüssigkeitstropfen nach unten zu ermöglichen.

3. Vorrichtung nach Anspruch 1 oder 2, dadurch gekennzeichnet, daß der als ein Förderrohr ausgebildete Förderkörper (24) am unteren Ende einen Ring (30) mit einer Öffnung (26) aufweist, deren Durchmesser kleiner ist als der Durchmesser der Innenwand (28) des Förderrohres.

4. Vorrichtung nach Anspruch 3, dadurch gekennzeichnet, daß an der Innenwand (28) des Förderrohres Wandrippen (62) angeordnet sind, welche insbesondere als Stege ausgebildet sind, deren Innenkanten im wesentlichen auf dem gleichen Durchmesser liegen wie die Öffnung (26) des Ringes (30).

5. Vorrichtung nach einem der Ansprüche 1 bis 4, dadurch gekennzeichnet, daß im Bereich einer Außenwand (31) des Förderkörpers (24) ein Sieb (44) und/oder Platten (32) angeordnet sind.

6. Vorrichtung nach einem der Ansprüche 1 bis 5, dadurch gekennzeichnet, daß der oben auf dem Gehäuse (2) angeordnete Antriebsmotor (8) mittels einer insbesondere lösbar ausgebildeten Kupplung (68) mit dem Sprühkörper (34) direkt gekoppelt ist.

7. Vorrichtung nach einem der Ansprüche 1 bis 6, dadurch gekennzeichnet, daß der Förderkörper (24) und der Sprühkörper (34) eine eigene Lagerung aufweisen und indirekt antreibbar sind.

8. Vorrichtung nach einem der Ansprüche 1 bis 7, dadurch gekennzeichnet, daß die Flüssigkeit in einem Behälter (60) enthalten ist, in welchen die mit dem Gas bereits in Berührung gelangten Teile der Flüssigkeit von oben her unmittelbar zurückfließen können.

9. Vorrichtung nach einem der Ansprüche 1 bis 8, dadurch gekennzeichnet, daß der über dem Förderkörper (24) angeordnete Sprühkörper (34) einen bezüglich der Innenwand (28) des Förderkörpers (24) erweiterten Hohlraum (36) aufweist, welcher insbesondere kugelartig erweitert ist.

10. Vorrichtung nach Anspruch 9, dadurch gekennzeichnet, daß zumindest einige der vom Hohlraum (36) nach außen gerichteten Kanäle (38) in einem Winkel kleiner 90° bezüglich der Drehachse (42) geneigt angeordnet sind.

## Claims

1. Device for the purification of gas by means of liquid, comprising a chamber (14) into which the gas to be purified flows and into which the liquid is sprayed by means of a spray body (34), a delivery member (24) which can rotate about an axis of rotation together with the spray body (34) and which is immersed in the liquid present in a housing (2) and delivers said liquid upwards into the spray body (34), the body (34) having outwardly directed channels (38) for the passage of the upwardly delivered liquid which are distributed outside the spray body, and furthermore a discharge pipe (22) for the purified gas, characterised in that the channels (38) are sealed by radially external nozzles (40) through which the liquid is sprayed under pressure into the chamber (14), the required pressure build-up being predetermined by the radial length of the channels (38), and that guide elements (20) are arranged in the chamber (14) in such a manner that the liquid is separated from the purified gas before it flows off into the discharge pipe (22).

2. Device according to claim 1, characterised in that the guide elements (20) are arranged at least approximately vertically in order to allow the drops of liquid forming on the guide elements (20) to flow off downwards.

3. Device according to claim 1 or claim 2, characterised in that the delivery member (24) in the form of a delivery pipe is provided at its lower end with a ring (30) having an opening (26) the diameter of which is smaller than the diameter of the inner wall (28) of the delivery pipe.

4. Device according to claim 3, characterised in that wall ribs (62) are arranged on the inner wall (28) of the delivery pipe, said ribs being in particular in the form of webs, the inner edges of which are situated substantially on the same diameter as the opening (26) of the ring (30).

5. Device according to one of claims 1 to 4, characterised in that a sieve (44) and/or plates (32) are arranged in the region of an outer wall (31) of the delivery member (24).

6. Device according to one of claims 1 to 5, characterised in that the drive motor (8) arranged on top of the housing (2) is coupled directly to the spray body (34) by means of a coupling (68), in particular a releasable coupling.

7. Device according to one of claims 1 to 6, characterised in that the delivery member (24) and the spray body (34) have a bearing arrangement and can be driven indirectly.

8. Device according to one of claims 1 to 7, characterised in that the liquid is contained in a container (60) into which the portions of the liquid already in contact with the gas can flow back directly from above.

9. Device according to one of claims 1 to 8, characterised in that the spray body (34) arranged above the delivery member (24) has a cavity (36) which is expanded, in particular in a spherical manner, with respect to the inner wall (28) of the delivery member (24).

10. Device according to claim 9, characterised in that at least some of the outwardly directed channels (38) of the cavity (36) are inclined at an angle of less than 90° with respect to the axis of rotation (42).

## Revendications

1. Dispositif pour épurer les gaz au moyen d'un liquide, comprenant une chambre (14) dans laquelle le gaz à épurer pénètre et dans laquelle le liquide est pulvérisé au moyen d'un organe de pulvérisation (34), un organe de refoulement (24) qui peut tourner conjointement avec l'organe de pulvérisation (34) autour d'un axe de rotation et qui plonge dans le liquide dans un caisson (2), et refoule ce liquide vers le haut, dans l'organe de pulvérisation (34), l'organe (34) présentant des canaux (38) dirigés vers l'extérieur, pour le passage du liquide refoulé vers le haut, liquide qui est distribué à l'extérieur de l'organe de pulvérisation, et un tube d'extraction (22) pour le gaz épuré, ***caractérisé en ce que*** les canaux (38) sont terminés par des buses (40) situées radialement à l'extérieure à travers lesquelles le liquide est pulvérisé sous pression dans la chambre (14), la longueur radiale des canaux (38) étant prédéterminée par l'élévation de pression nécessaire, ***et en ce que*** des déflecteurs (20) sont disposés dans la chambre (14) de telle manière qu'il se produise une séparation du liquide du gaz épuré avant l'écoulement de ce gaz dans le tube d'extraction (22).

2. Dispositif selon la Revendication 1, ***caractérisé en ce que*** les éléments déflecteurs (20) sont disposés au moins approximativement verticalement, pour permettre aux gouttelettes de liquide qui se forment sur les éléments déflecteurs (20) de s'écouler vers le bas.

3. Dispositif selon la Revendication 1 ou 2, ***caractérisé en ce que*** l'organe de refoulement (24), constitué par un tube de refoulement, présente à l'extrémité inférieure un anneau (30) présentant une ouverture (26) dont le diamètre est plus petit que le diamètre de la paroi intérieure (28) du tube de refoulement.

4. Dispositif selon la Revendication 3, ***caractérisé en ce que*** sur la paroi intérieure (28) du tube de refoulement, sont disposées des nervures de parois (62) qui sont constituées en particulier par des voiles dont les bords intérieurs se trouvent sensiblement sur le même diamètre que l'ouverture (26) de l'anneau (30).

5. Dispositif selon une des Revendications 1 à 4, ***caractérisé en ce que***, dans la région d'une paroi extérieure (31) de l'organe de refoulement (24), sont disposés un filtre (44) et/ou des plaques (32).

6. Dispositif selon une des Revendications 1 à 5, ***caractérisé en ce que*** le moteur d'entraînement (8) disposé en haut sur le caisson (2) est accouplé directement à l'organe de pulvérisation (34) au moyen d'un accouplement (68), qui est en particulier de constitution désaccouplable.

7. Dispositif selon une des Revendications 1 à 6, ***caractérisé en ce que*** l'organe de refoulement (24) et l'organe de pulvérisation (34) présentent chacun un palier qui lui est propre et peuvent être entraînés indirectement.

8. Dispositif selon une des Revendications 1 à 7, ***caractérisé en ce que*** le liquide est contenu dans un récipient (60) dans lequel les parties du liquides qui sont déjà entrées en contact avec le gaz de refluer directement de haut en bas.

9. Dispositif selon une des Revendications 1 à 8, ***caractérisé en ce que*** l'organe de pulvérisation (34) disposé au-dessus du organe de refoulement (24) présente une cavité (36) élargie relativement à la paroi intérieure (28) de l'organe de refoulement (24), qui est élargi, en particulier avec une forme sphérique.

10. Dispositif selon la Revendication 9, ***caractérisé en ce qu'***au moins certains des canaux (38) dirigés vers l'extérieur à partir de la cavité (36) sont inclinés sur l'axe de rotation (42) d'un angle inférieur à 90°.
